# EUROPEAN PATENT SPECIFICATION

(11) **EP 4 017 206 B1**
(45) Date of publication and mention of the grant of the patent: **04.11.2026**
(21) Application number: 20853348.9
(22) Date of filing: 21.07.2020
(51) Int. Cl.: H04W 36/00, H04W 76/10, H04W 76/18, H04W 76/19, H04W 84/04, H04W 88/08

(54) **CONNECTION ESTABLISHMENT METHOD AND DEVICE, LINK STATE NOTIFICATION METHOD AND DEVICE, INTERFACE ESTABLISHMENT METHOD AND DEVICE, INFORMATION TRANSMISSION METHOD AND DEVICE, INTEGRATED ACCESS BACKHAUL NODE, CENTRALIZED UNIT, SYSTEM AND STORAGE MEDIUM**
VERFAHREN UND VORRICHTUNG ZUM VERBINDUNGSAUFBAU, VERFAHREN UND VORRICHTUNG ZUR MELDUNG DES VERBINDUNGSZUSTANDES, VERFAHREN UND VORRICHTUNG ZUM SCHNITTSTELLENAUFBAU, VERFAHREN UND VORRICHTUNG ZUR INFORMATIONSÜBERTRAGUNG, INTEGRIERTER ZUGANGSBACKHAUL-KNOTEN, ZENTRALISIERTE EINHEIT, SYSTEM UND SPEICHERMEDIUM
PROCÉDÉ ET DISPOSITIF D'ÉTABLISSEMENT DE CONNEXION, PROCÉDÉ ET DISPOSITIF DE NOTIFICATION D'ÉTAT DE LIAISON, PROCÉDÉ ET DISPOSITIF D'ÉTABLISSEMENT D'INTERFACE, PROCÉDÉ ET DISPOSITIF DE TRANSMISSION D'INFORMATIONS, NOEUD DE RACCORDEMENT D'ACCÈS INTÉGRÉ, UNITÉ CENTRALISÉE, SYSTÈME ET SUPPORT DE STOCKAGE

(30) Priority: 15.08.2019 CN 201910768209
(43) Date of publication of application: 22.06.2022
(73) Proprietor: ZTE Corporation, Shenzhen, Guangdong 518057 (CN)
(72) Inventor: LUO, Wei, Shenzhen, Guangdong 518057 (CN); CHEN, Lin, Shenzhen, Guangdong 518057 (CN)
(74) Representative: Ricker, Mathias
(86) International application number: PCT/CN2020/103176
(87) International publication number: WO 2021/027501

(56) References cited:
- WO-A1-2020/191768
- US-A1- 2019 053 183
- SAMSUNG: "3GPP TSG-RAN WG3 Meeting #105; R3-192608; Further discussion on IP address issues of IAB network", vol. RAN WG2, no. Reno, NV, USA; 20190513 - 20190517, 2 May 2019 (2019-05-02), XP051712813, Retrieved from the Internet <URL:http://www.3gpp.org/ftp/tsg%5Fran/WG3%5FIu/TSGR3%5F104/Docs/R3%2D192608%2Ezip> [retrieved on 20190502]
- HUAWEI: "3GPP TSG-RAN WG3 Meeting #104; R3-192807; IP address management for IAB nodes", vol. RAN WG3, no. Reno, Nevada, USA; 20190513 - 20190517, 3 May 2019 (2019-05-03), XP051712999, Retrieved from the Internet <URL:http://www.3gpp.org/ftp/tsg%5Fran/WG3%5FIu/TSGR3%5F104/Docs/R3%2D192807%2Ezip> [retrieved on 20190503]
- ZTE ET AL: "3GPP TSG-RAN WG2 Meeting #104; R3-181741; Discussion on IAB node discovery and selection", vol. RAN WG2, no. Spokane, USA; 20181112 - 20181116, 2 November 2018 (2018-11-02), XP051481323, Retrieved from the Internet <URL:http://www.3gpp.org/ftp/tsg%5Fran/WG2%5FRL2/TSGR2%5F104/Docs/R2%2D1817418%2Ezip> [retrieved on 20181102]
- ZTE ET AL: "3GPP TSG-RAN WG3 Meeting #104; R3-192519; Discussion on network-controlled IAB migration handling", vol. RAN WG3, no. Reno, USA; 20190513 - 20190517, 13 May 2019 (2019-05-13), XP051731802, Retrieved from the Internet <URL:http://www.3gpp.org/ftp/Meetings%5F3GPP%5FSYNC/RAN3/Docs/R3%2D192519%2Ezip> [retrieved on 20190513]
- ZTE ET AL: "3GPP TSG-RAN WG3 Meeting #105; R3-193655; Discussion on inter-CU IAB migration handling", vol. RAN WG3, no. Ljubljana, Slovenija; 20190826 - 20190830, 17 August 2019 (2019-08-17), XP051769859, Retrieved from the Internet <URL:http://www.3gpp.org/ftp/tsg_ran/WG3_Iu/TSGR3_105/Docs/R3-193655.zip> [retrieved on 20190817]
- ANONYMOUS: "3rd Generation Partnership Project; Technical Specification Group Radio Access Network; NR; Study on Integrated Access and Backhaul; (Release 16)", 3GPP STANDARD; TECHNICAL REPORT; 3GPP TR 38.874, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V16.0.0, 31 December 2018 (2018-12-31), Mobile Competence Centre ; 650, route des Lucioles ; F-06921 Sophia-Antipolis Cedex ; France, pages 1 - 111, XP051591643
- QUALCOMM INCORPORATED ET AL.: "IAB inter-CU Topology Adaptation for Arch 1a", 3GPP TSG-RAN WG3 MEETING #102, R3-186456, 16 November 2018 (2018-11-16), XP051482600
- QUALCOMM INC.: "IAB topological redundancy for architecture 1a", 3GPP TSG-RAN WG3 MEETING #101, R3-184694, 24 August 2018 (2018-08-24), XP051528041

## Description

### TECHNICAL FIELD

The present application relates to the field of communications.

### BACKGROUND

Integrated access and backhaul (IAB) is an important technology in the 5th generation mobile communication technology (5G). The goal of IAB is to make one or more IAB-nodes connect to a parent node through New Radio (NR) using mobile terminal (MT) function part located locally, and on this basis, form a multi-hop wireless self-backhaul network. Each IAB-node contains one distributed unit (DU) function part and one MT function part. The DU is used for serving a user equipment (UE) of the current node and the MT of the next hop node and establishing a radio link control (RLC) connection with the next hop node. The function of the MT is equivalent to a UE and is used for accessing a parent node of the previous hop through a UN interface of NR and establishing an RLC connection with the parent node of the previous hop. Therefore, different IAB-nodes can access the parent node of the previous hop by using the wireless access capability of the local MT, and the parent node can be connected to the previous hop node and finally connected to a donor next generation NodeB (donor gNB). The donor gNB includes a donor centralized unit (CU) and multiple donor DUs, and each donor DU is connected to the donor CU in a wired manner. The donor CU and each donor DU, as well as the donor CU and the DU of each IAB-node, are connected via an enhanced F1 interface. The phenomenon where the parent node of the IAB-node is replaced is called IAB migration. When an IAB-node hands over to a new donor CU, child IAB-nodes connected to the IAB-node cannot maintain service continuity. Samsung published a document entitled: "3GPP TSG-RAN WG3 Meeting #105; R3-192608; Further discussion on IP address issues of IAB network" disclosing the IF address assignment issues.

Huawei published a document entitled:" 3GPP TSG-RAN WG3 Meeting #104; R3-192807; IP address management for IAB nodes" disclosing IP address management for IAB nodes.

ZTE et al. published a document entitled: "3GPP TSG-RAN WG2 Meeting #104; R3-181741; Discussion on IAB node discovery and selection" disclosing IAB node discovery and selection. ZTE published a document entitled "Discussion on network-controlled IAB migration handling", R3-192519, vol. RAN WG3, no. Reno, USA; 3GPP TSG-RAN WG3 Meeting #104; 20190513 - 20190517; 13 May 2019" disclosing network-controlled intra-CU and inter-CU migration related issues and provide an intra-CU migration procedure.

The document entitled "3GPP TSG RAN, "NR; Study on Integrated Access and Backhaul; (Release 16)", 3GPP TR 38.874, no. V16.0.0, 31 December 2018" discloses the architectures, the radio protocols, and the physical layer aspects related to relaying of access traffic by sharing radio resources between access and backhaul links.

### SUMMARY

The invention is set out in the appended set of claims.

### BRIEF DESCRIPTION OF DRAWINGS

FIG. 1 is a flowchart one of a connection establishment method according to an embodiment of the present application;
FIG. 2 is a flowchart two of a connection establishment method according to an embodiment of the present application;
FIG. 3 is a flowchart one of an interface establishment method according to an embodiment of the present application;
FIG. 4 is a flowchart of an information transmission method according to an embodiment of the present application;
FIG. 5 is a flowchart two of an interface establishment method according to an embodiment of the present application;
FIG. 6 that is an implementation flowchart of Embodiment one of the present application;
FIG. 7 is a structural schematic diagram of a connection establishment device according to an embodiment of the present application;
FIG. 8 is a structural schematic diagram one of an interface establishment device according to an embodiment of the present application;
FIG. 9 is a structural schematic diagram of an information transmission device according to an embodiment of the present application;
FIG. 10 is a structural schematic diagram two of an interface establishment device according to an embodiment of the present application;
FIG. 11 is a structural schematic diagram of an IAB-node for connection establishment or interface establishment according to an embodiment of the present application;
FIG. 12 is a structural schematic diagram of a CU for information transmission or interface establishment according to an embodiment of the present application;
FIG. 13 is a structural schematic diagram one of a communication system according to an embodiment of the present application; and
FIG. 14 is a structural schematic diagram two of a communication system according to an embodiment of the present application.

### DETAILED DESCRIPTION

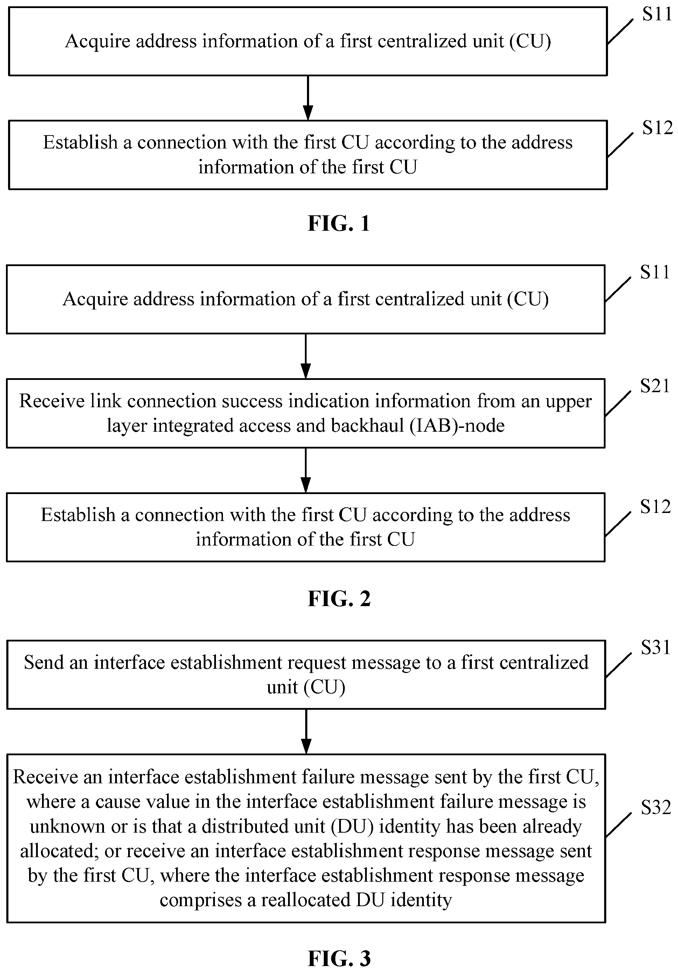

The present invention is better understood with reference to Figures 1-2, 11 and 13-14. The detailed description with reference to Figures 3-10 and 12 is given for illustrative purposes for a better understanding of the invention.

Embodiments of the present application are described below in conjunction with the drawings. An embodiment of the present application provides a connection establishment method. As shown in FIG. 1 that is a flowchart one of a connection establishment method according to an embodiment of the present application, the method includes S11 and S12.

In S11, address information of a first CU is acquired.

In S12, a connection is established with the first CU according to the address information of the first CU.

In an embodiment, the first CU may be a target donor CU, and after the connection is established with the first CU, an F1 setup request may be sent to the first CU. The execution object of the connection establishment method provided by this embodiment of the present application may be an IAB-node, especially a migrating IAB-node and a downstream IAB-node connected to the migrating IAB-node, or an IAB-node executing RRC reestablishment and a downstream IAB-node connected to the IAB-node executing RRC reestablishment. The downstream may refer to a direction away from an IAB-donor in multi-hop backhauling.

In an embodiment, S11 includes: identity information of the first CU is received, and a mapping relationship table between CU identity information and CU address information is looked up according to the identity information of the first CU to obtain the address information of the first CU.

The mapping relationship table between CU identity information and CU address information may be stored in advance, may be acquired through a network, or may be configured through operation administration and maintenance (OAM).

The identity information of the first CU may be carried in an adapter layer message that is from an upper layer IAB-node.

The upper layer IAB-node includes a parent IAB-node that directly provides services or an IAB-node that participates in forwarding data to the first CU.

The identity information of the first CU may also be carried in a radio resource control (RRC) reconfiguration message that is from the first CU.

The RRC reconfiguration message may include a cell identity and a physical cell identity, and the cell identity may include the identity information of the first CU.

In an embodiment, S11 includes: the address information of the first CU is received from a second CU.

The address information of the first CU may be carried in an F1 message or an RRC reconfiguration message.

In this embodiment of the present application, the second CU may be a source donor CU.

FIG. 2 is a flowchart two of a connection establishment method according to an embodiment of the present application. As shown in FIG. 2, in an implementation, before the connection is established with the first CU in S12, the method further includes S21.

In S21, link connection success indication information is received from an upper layer IAB-node, where the link connection success indication information includes at least one of: the identity information of the first CU, a cell identity, a CU change identity, an Internet Protocol (IP) address of the first CU, a link migration success indication, a link reestablishment success indication, an identity of an IAB-node for link migration or an identity of an IAB-node for link reestablishment. In an implementation, S11 includes: the address information of the first CU is received from the first CU.

The address information of the first CU may be carried in an RRC reconfiguration message.

An embodiment of the present application further provides a link state notification method. The method includes: a first communication node sends link state information to a second communication node, where the second communication node is a child node of the first communication node.

The link state information includes at least one of: identity information of a CU connected to the first communication node, change information of the CU connected to the first communication node, an IP address of the CU connected to the first communication node, a link migration indication of the first communication node or a link reestablishment indication of the first communication node.

In an embodiment, the first communication node and the second communication node are IAB-nodes.

The first communication node may send the link state information to the second communication node when performing link migration; or, the first communication node may send the link state information to the second communication node when performing RRC reestablishment.

In an embodiment, the link migration indication of the first communication node includes at least one of: a link migration initiation indication, a link migration success indication, or a link migration failure indication.

An embodiment of the present application further provides an interface establishment method. As shown in FIG. 3 that is a flowchart one of an interface establishment method according to an embodiment of the present application, the method includes S31 and S32.

In S31, an interface establishment request message is sent to a first CU.

In S32, an interface establishment failure message sent by the first CU is received, where a cause value in the interface establishment failure message is unknown or is that a DU identity has been already allocated; or an interface establishment response message sent by the first CU is received, where the interface establishment response message includes a reallocated DU identity.

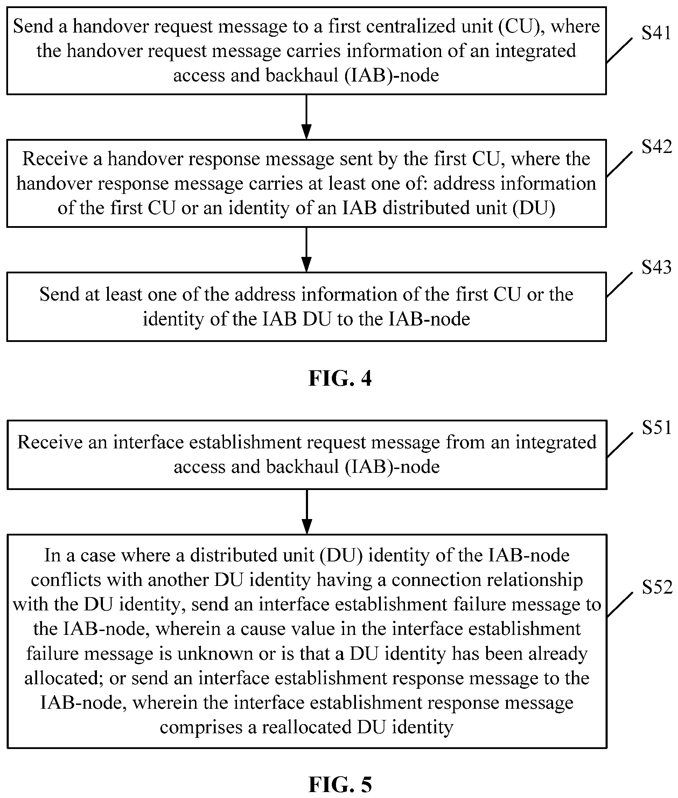

An embodiment of the present application further provides an information transmission method. As shown in FIG. 4 that is a flowchart of an information transmission method according to an embodiment of the present application, the method includes S41 and S42.

In S41, a handover request message is sent to a first CU, where the handover request message carries information of an IAB-node.

In S42, a handover response message sent by the first CU is received, where the handover response message carries at least one of: address information of the first CU or an identity of an IAB DU.

The information transmission method provided by this embodiment may be applied to a source donor CU.

In a possible embodiment, the information of the IAB-node includes at least one of: identity information of the IAB-node, context information of a backhaul channel of the IAB-node, context information of a UE served by the IAB-node or context information of a downstream IAB-node of the IAB-node.

As shown in FIG. 4, the information transmission method provided by this embodiment of the present application may further include S43.

In S43, at least one of the address information of the first CU or the identity of the IAB DU is sent to the IAB-node.

In an embodiment, at least one of the address information of the first CU and the identity of the IAB DU is carried in an RRC reconfiguration message or an F1 message.

An embodiment of the present application further provides another information transmission method, and the method includes: identity information or address information of a first CU is sent to an IAB-node.

The information transmission method provided by this embodiment may be applied to a target donor CU.

The address information or the address information of the first CU may be carried in an RRC reconfiguration message.

In an embodiment, the RRC reconfiguration message includes a cell identity and a physical cell identity, and the cell identity carries the identity information of the first CU.

An embodiment of the present application further provides an interface establishment method. As shown in FIG. 5 that is a flowchart two of an interface establishment method according to an embodiment of the present application, the method includes S51 and S52.

In S51, an interface establishment request message is received from an IAB-node.

In S52, in a case where a DU identity of the IAB-node conflicts with another DU identity having a connection relationship with the DU identity, an interface establishment failure message is sent to the IAB-node, where a cause value in the interface establishment failure message is unknown or is that a DU identity has been already allocated; or an interface establishment response message is sent to the IAB-node, where the interface establishment response message includes a reallocated DU identity.

Specific embodiments are described below with reference to drawings.

### Embodiment one

In this embodiment, the IAB-node 3 is a child node of the IAB-node 1. When the IAB-node 1 handover happens, a source donor CU needs to send context information of the IAB-node 1 to a target donor CU.

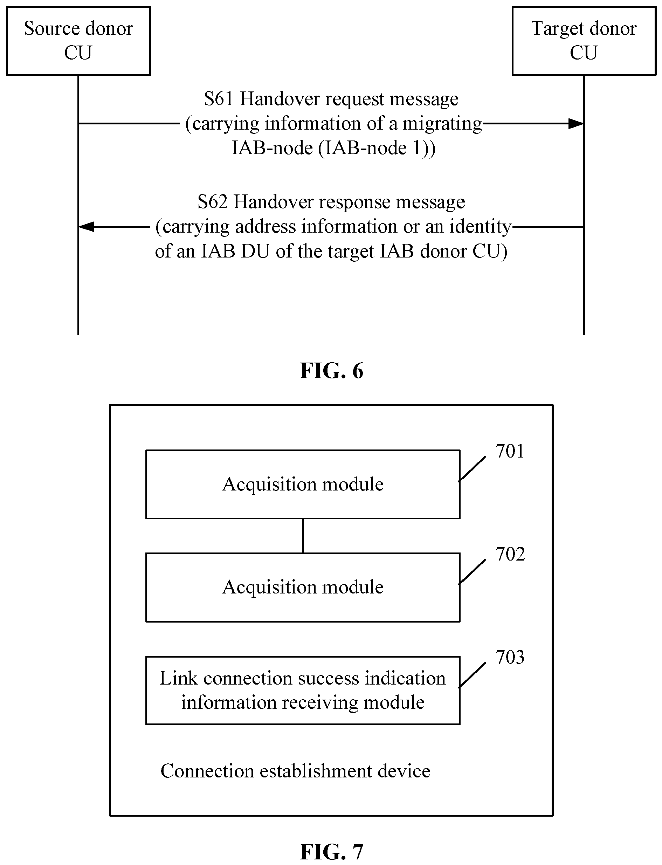

As shown in FIG. 6 that is an implementation flowchart of Embodiment one of the present application, Embodiment one includes S61 and S62.

In S61, a source donor CU sends a handover request message to a target donor CU, where the handover request message carries information of the migrating IAB-node 1.

In this embodiment, the information of the IAB-node 1 may include at least one of: identity information of the IAB-node 1, context information of a backhaul channel of the IAB-node 1, context information of a UE served by the IAB-node 1 or context information of a downstream IAB-node (for example, IAB-node 3) of the IAB-node 1.

In S62, the target donor CU sends a handover response message to the source donor CU, where the handover response message carries at least one of: address information of target donor CU or an identity of an IAB DU.

The identity of the IAB DU includes at least one of: a DU identity of a migrating node (for example, IAB-node 1) or a DU identity of a downstream node (for example, IAB-node 3) of the migrating node.

### Embodiment two

When the IAB-node 1 handover happens, this embodiment solves how the IAB-node 1 obtains the IP address of the target donor CU and how the downstream IAB node of a migrating IAB node obtains the IP address of the target donor CU if the migrating IAB node continues to serve the downstream IAB node.

In this embodiment, the IAB-node 3 is a child node of the IAB-node 1. For the downstream IAB node (that is, IAB-node 3), although the parent IAB-node of the downstream IAB node, that is, IAB-node 1, has not changed, the donor CU has changed. Therefore, the IAB-node 3 needs to be notified that the donor CU has changed. Moreover, in order to establish a new F1 connection, the IAB-node 3 needs to obtain the IP address of the target donor CU, which is because a gNB-DU needs to establish a transport network layer (TNL) connection of the gNB-DU before an F1 setup request message is sent to the gNB-DU and the IP address needs to be obtained to establish the TNL connection. This embodiment provides the following manners for the downlink IAB node to obtain the IP address of the target donor CU.

### Manner 1

Each IAB-node (including a migrating IAB-node and a downlink IAB-node thereof) may configure a mapping table of CU identities (IDs) to CU IP addresses in advance, or download a mapping table of CU IDs to CU IP address from a network side, or configure a mapping table of CU IDs to CU IP addresses through OAM. In this way, the IAB-node only needs to obtain the gNB ID (that is, the CU ID of the target donor CU) of the target donor CU to look up the above-mentioned mapping table, so as to obtain the IP address of the target donor CU. The IP address may be a transport layer address. The IAB node may obtain the NR cell global identifier (NCGI) of the target donor CU and obtain the CU ID of the target donor CU according to the NCGI. For the migrating IAB-node, the CU ID of the target donor CU may be obtained during the MT handover process.

If the migrating IAB-node continues to serve the downstream IAB-node, the downstream IAB-node may obtain the CU ID of the target donor CU in at least two manners. The first manner is as follows: the migrating IAB-node directly notifies the lower layer IAB-node through an adapter layer message after the handover is completed, and the lower layer IAB-node continues to notify a lower layer IAB-node of the lower layer IAB-node. The adapter layer message includes at least one of: identity information of the target, a cell identity, CU change identity, an IP address of the first CU or a link migration success indication.

The second manner is as follows: after the migrating IAB-node handover is completed, the target donor CU notifies the IAB-node 3 through RRC signaling (for example, RRC reconfiguration message) that the migration where the DU does not change but the CU changes happens. For example, the RRC reconfiguration message carries a cell identity and a physical cell identity, and the cell identity is used for indicating the CU ID (for example, the gNB ID of the target cell) of the target donor CU. Since the donor CU changes, the cell identity also changes; but since the DU has not changed, the physical cell identity may not change. The RRC reconfiguration message may contain additional information in addition to the above-mentioned identities.

Based on the above-mentioned information, the IAB MT or the UE may determine that the handover where the CU changes but the DU does not change happens, and the cell access process does not need to be re-performed but the update of the configuration information needs to be received subsequently. Then, the downstream IAB-node (for example, IAB-node 3 in this embodiment) may look up the above-mentioned mapping table, obtain the IP address of the target donor CU, establish a TNL connection with the target donor CU, and then initiate an F1 connection establishment procedure to the target donor CU.

### Manner 2

Source donor CU sends the IP address of a target donor CU to a downstream IAB-node, which should be performed before the source donor CU sends a handover command to a migrating IAB-node.

Manner 2 may include the following two forms: Manner 2a and Manner 2b.

In Manner 2a, the source donor CU sends the IP address of the target donor CU to the DU part of the downstream IAB-node through an F1 interface.

In Manner 2b, the source donor CU sends the IP address of the target donor CU to the DU part of the downstream IAB-node through an RRC message.

In the case of Manner 2, the source donor CU needs to obtain the IP address of the target donor CU and may obtain the IP address of the target donor CU in one of the following manners: the source donor CU acquired the IP address of the target donor CU during the handover preparation process; the source donor CU configures a mapping table of CU IDs to CU IP addresses in advance; the source donor CU downloads a mapping table of CU IDs to CU IP addresses from a network side; or the source donor CU configures a mapping table of CU IDs to CU IP addresses through OAM.

For the migrating IAB-node, for Manner 2b, the source donor CU sends an RRC reconfiguration message to the MT of an IAB-node (for example, IAB-node 1 in this embodiment), and the RRC reconfiguration message may include the IP address of the target donor CU and other information such as a cell identity and a physical cell identity. For Manner 2a, the source donor CU sends an F1 message to the DU of an IAB-node (for example, IAB-node 1 in this embodiment), and the F1 message may include the IP address of the target donor CU and is used for instructing the DU of the downstream IAB-node to release the F1 connection with the source donor CU and establish the F1 connection with the target donor CU.

If the migrating IAB node continues to serve the downstream IAB-node, the source donor CU then determines which downstream IAB nodes need to hand over to the target donor CU. For Manner 2b, the source donor CU sends an RRC reconfiguration message to the MT of a downstream IAB-node (for example, IAB-node 3 in this embodiment), and the RRC reconfiguration message may include the IP address of the target donor CU and other information such as a cell identity and a physical cell identity. For Manner 2a, the source donor CU sends an F1 message to the DU of the downstream IAB-node (for example, IAB-node 3 in this embodiment), and the F1 message may include the IP address of the target donor CU and is used for instructing the DU of the downstream IAB-node to release the F1 connection with the source donor CU and establish the F1 connection with the target donor CU.

Since the above-mentioned information is sent before the migrating IAB-node handover and there is the possibility of handover failure for the migrating IAB-node, the downstream IAB-node, although receiving the above-mentioned information, cannot immediately initiate the new F1 connection establishment process. Therefore, when the downstream IAB-node (for example, IAB-node 3 in this embodiment) receives the above-mentioned information, the downstream IAB-node does not immediately initiate the F1 connection establishment process, but waits for the handover success of the parent IAB-node (for example, IAB-node 1 in this embodiment) before the downstream IAB-node releases the F1 connection with the source donor CU and establishes the F1 connection with the target donor CU. Then, after the migrating IAB-node handover is completed, the migrating IAB-node needs to send one piece of indication message to the IAB-node 3, and after the IAB-node 3 receives the indication information, the IAB-node 3 starts to perform the handover process of changing only the CU without changing the DU and establish a new F1 connection.

For the migrating IAB-node, directly carrying the IP address of the target donor CU in the RRC reconfiguration message is a simpler manner.

In an embodiment, the above-mentioned F1 connection may refer to an F1 access protocol (AP) connection.

### Manner 3

A target donor CU sends the IP address of the target donor CU to the MT part of a downstream IAB-node through an RRC message.

For the migrating IAB-node, after the MT part of the IAB-node establishes an RRC connection with the target donor CU, the target donor CU sends the IP address to the MT part of the IAB-node through an RRC reconfiguration message, and then the MT part of the IAB-node notifies the DU part, so as to obtain the IP address of the target donor CU.

If the migrating IAB-node continues to serve the downstream IAB node, then for the downstream IAB node (for example, IAB-node 3 in this embodiment) of the migrating IAB node, after the DU part of the migrating IAB node is activated, the target donor CU may send an RRC reconfiguration message to a child IAB node (for example, IAB-node 3 in this embodiment) of the migrating IAB node, and the RRC reconfiguration message carries the IP address of the target donor CU. Upon receiving the RRC reconfiguration message, the child IAB-node may determine that the donor CU has changed and thus initiates the F1 connection establishment process with the target donor CU. The F1 connection herein may be an F1-C connection. After the F1 connection between the IAB-node 3 and the target donor CU is established, the target donor CU may continue to notify the IP address to the child IAB-node of the IAB-node 3 through the RRC messages.

### Embodiment three

If the UE needs to be handed over along with the migrating IAB node, although the serving DU is not updated, it is necessary to notify the UE of the cell ID and some configuration information due to the replacement of the CU. Then, after the DU function of the migrating IAB-node is activated, the donor CU may send an RRC reconfiguration message to notify the updated information, and the RRC reconfiguration message, for example, carries a target cell ID. In order to avoid that the UE is affected too much, after the DU replaces the CU, only the cell identity changes but the physical cell identity of the cell does not change. In this way, for the UE, when the UE accesses the same DU, a random access process does not need to be performed to find a new cell, and the resources of the physical layer and the media access control (MAC) layer do not change. Because the CU changes, packet data convergence protocol (PDCP)-related configuration information and service data adaptation protocol (SDAP)-related configuration information also change. Then, the donor CU may notify the UE of the updated cell configuration information (new cell identity and unchanged PCI) and bearer configuration information through the RRC reconfiguration message, where the bearer configuration information may include the above-mentioned PDCP-related configuration information and SDAP-related configuration information. In addition, the updated cell configuration information may also include public land mobile network (PLMN) information, a tracking area code (TAC), and upstream and downstream slot configuration information.

### Embodiment four

According to the related art, the gNB-DU ID is unique within one gNB-CU, but if the CU is replaced, there is a possibility of conflict. Therefore, when the DU replaces the CU, when the CU receives the connection establishment request with the CU initiated by the DU, if it is found that the current gNB-DU ID conflicts with the gNB-DU IDs of other connections, the F1 setup failure message may be sent, and the cause value therein is set to unknown or an already allocated DU identity (already allocated gNB-DU ID); or an F1 setup response message may be sent, and the F1 setup response message carries a new DU ID allocated by the CU to the gNB-DU.

In addition, the gNB-CU UE F1AP ID, the gNB-CU-CP UE E1AP ID, and the gNB-CU-UP UE E1AP ID are also processed in the same manner described above.

### Embodiment five

According to the related art, the gNB-DU ID is unique within one gNB-CU, but if the CU is replaced, in a case where the already allocated DU identity continues to be used, there is a possibility of conflict. Therefore, when the DU replaces the CU, in order to avoid the possibility of conflict, the target CU may allocate a new DU identity to the DU in advance. At least the following two solutions may be adopted in this embodiment of the present application.

### Manner 1

A source CU sends a handover request message to a target CU, where the handover request message carries information of an IAB-node.

The source CU receives a handover response message sent by the target CU, where the handover response message carries identity information of an IAB DU.

The source CU herein sends the identity information of the IAB DU to the IAB-node, and the IAB-node may then use the identity information to establish an F1 connection with the target CU. If the migrating IAB-node continues to serve the downstream IAB-node, for the downstream IAB-node (for example, IAB-node 3 in this embodiment) of the migrating IAB-node, the source CU may also send the identity information of the downstream IAB DU to the downstream IAB node in a similar manner, and then the downstream IAB-node may use the identity information to establish an F1 connection with the target CU.

### Manner 2

For the migrating IAB-node, after the MT part of the IAB-node establishes an RRC connection with the target donor CU, the target donor CU sends the identity information of the IAB DU to the MT part of the IAB-node through an RRC reconfiguration message, then the MT part of the IAB-node notifies the DU part, and the IAB-node may use the identity information to establish an F1 connection with the target CU.

If the migrating IAB-node continues to serve the downstream IAB-node, the downstream IAB-node (for example, IAB-node 3 in this embodiment) of the migrating IAB-node may also use the above-mentioned manner. After the MT part of the downstream IAB-node establishes an RRC connection with the target donor CU, the target donor CU sends the identity information of the IAB DU to the MT part of the downstream IAB-node through an RRC reconfiguration message, then the MT part of the downstream IAB-node notifies the DU part, and the downstream IAB-node may use the identity information to establish an F1 connection with the target CU.

### Embodiment six

When the IAB-node needs to perform RRC reestablishment due to link failure or other causes, if the reestablished cell is connected to a new target donor CU, the IP address of the target CU needs to be re-obtained. For example, the target donor CU sends its own IP address information to the MT part of the IAB-node through an RRC reconfiguration message, then the MT part of the IAB-node notifies the DU part, and the DU part of the IAB-node may use the IP address to establish a TNL connection with the target CU and then establish an F1 connection.

In addition, if the IAB-node continues to serve the downstream IAB-node after reestablishing a new target donor CU, the downstream IAB-node also needs to re-establish an F1 connection with the new target donor CU and obtain the IP address of the target donor CU. One manner is as follows: the target donor CU sends its own IP address information to the MT part of the downstream IAB-node through an RRC reconfiguration message, then the MT part of the downstream IAB-node notifies the DU part, and the DU part of the downstream IAB-node may use the IP address to establish a TNL connection with the target CU and then establish an F1 connection. Another manner is as follows: after the IAB-node performs RRC reestablishment, the IAB-node sends the indication information of reestablishment completion to the downstream IAB node through an adapter layer message, and the adapter layer message includes at least one of: identity information of the target, a cell identity, CU change identity, an IP address of the first CU or a link migration success indication.

The above implementation is similar to some manners in the above-mentioned embodiments, and details are not repeated here.

### Embodiment seven

When the IAB-node needs to perform RRC reestablishment due to link failure or other causes, if the reestablished cell is connected to a new target donor CU, in a case where the already allocated DU identity continues to be used, there is a possibility of conflict. Therefore, when the DU replaces the CU, in order to avoid the possibility of conflict, the target CU may allocate a new DU identity to the DU in advance.

For example, the target donor CU sends identity information of an IAB DU to the MT part of the IAB-node through an RRC reconfiguration message, then the MT part of the IAB-node notifies the DU part, and the DU part of the IAB-node may use the identity information to establish an F1 connection with the target CU. The above implementation is similar to some manners in the above-mentioned embodiments, and details are not repeated here.

### Embodiment eight

In this embodiment, a first communication node (for example, a parent IAB-node) may send link state information to a second communication node (for example, a child IAB-node of the first communication node) when performing link migration or RRC reestablishment. The link state information may include at least one of: identity information of a CU connected to the first communication node, change information of the CU connected to the first communication node, an IP address of the CU connected to the first communication node, a link migration indication of the first communication node or a link reestablishment indication of the first communication node. The link migration indication of the first communication node may include at least one of: a link migration initiation indication, a link migration success indication, or a link migration failure indication.

An embodiment of the present application further provides a connection establishment device. As shown in FIG. 7 that is a structural schematic diagram of a connection establishment device according to an embodiment of the present application, the device includes an acquisition module 701 and a connection establishment module 702.

The acquisition module 701 is configured to acquire address information of a first CU.

The connection establishment module 702 is configured to establish a connection with the first CU according to the address information of the first CU.

In an embodiment, the acquisition module 701 is configured to receive identity information of the first CU, and look up, according to the identity information of the first CU, a mapping relationship between CU identity information and CU address information to obtain the address information of the first CU.

The mapping relationship table between CU identity information and CU address information may be stored in advance, may be acquired through a network, or may be configured through OAM.

In an embodiment, the acquisition module 701 is configured to receive the address information of the first CU from a second CU or the first CU.

As shown in FIG. 7, the device may further include a link connection success indication information receiving module 703.

The link connection success indication information receiving module 703 is configured to receive link connection success indication information from an upper layer IAB-node; where the link connection success indication information includes at least one of: the identity information of the first CU, a cell identity, a CU change identity, an IP address of the first CU, a link migration success indication, a link reestablishment success indication, an identity of an IAB-node for link migration or an identity of an IAB-node for link reestablishment.

An embodiment of the present application further provides a link state notification device, and the device may be applied to a first communication node and includes a link state notification information sending module.

The link state notification information sending module is configured to send link state information to a second communication node, where the second communication node is a child node of the first communication node.

The link state information includes at least one of: identity information of a CU connected to the first communication node, change information of the CU connected to the first communication node, an IP address of the CU connected to the first communication node, a link migration indication of the first communication node or a link reestablishment indication of the first communication node.

The first communication node and the second communication node may be IAB-nodes.

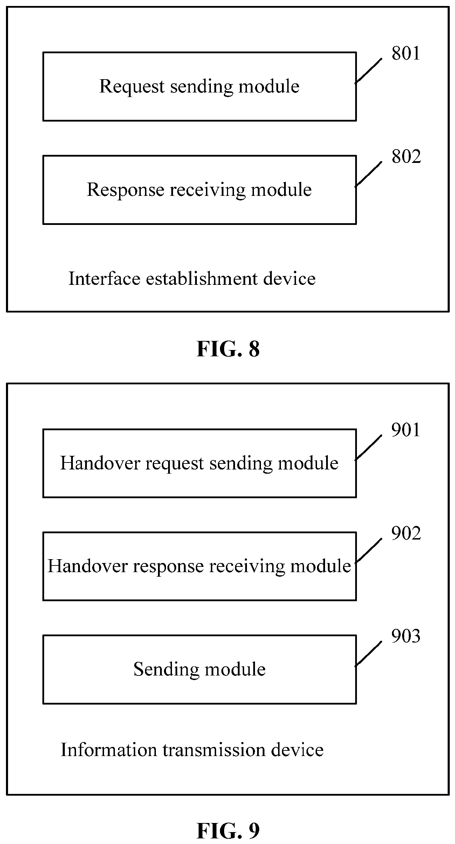

An embodiment of the present application further provides an interface establishment device. As shown in FIG. 8 that is a structural schematic diagram one of an interface establishment device according to an embodiment of the present application, the device includes a request sending module 801 and a response receiving module 802.

The request sending module 801 is configured to send an interface establishment request message to a first CU.

The response receiving module 802 is configured to receive an interface establishment failure message sent by the first CU, where a cause value in the interface establishment failure message is unknown or is that a DU identity has been already allocated; or receive an interface establishment response message sent by the first CU, where the interface establishment response message includes a reallocated DU identity.

An embodiment of the present application further provides an information transmission device. As shown in FIG. 9 that is a structural schematic diagram of an information transmission device according to an embodiment of the present application, the device includes a handover request sending module 901 and a handover response receiving module 902.

The handover request sending module 901 is configured to send a handover request message to a first CU, where the handover request message carries information of an IAB-node.

The handover response receiving module 902 is configured to receive a handover response message sent by the first CU, where the handover response message carries at least one of: address information of the first CU or an identity of an IAB DU.

As shown in FIG. 9, the device may further include a sending module 903.

The sending module 903 is configured to send at least one of the address information of the first CU or the identity of the IAB DU to the IAB-node.

An embodiment of the present application further provides another information transmission device. The device includes an identity or address sending module, which is configured to send identity information or address information of a first CU to an IAB-node.

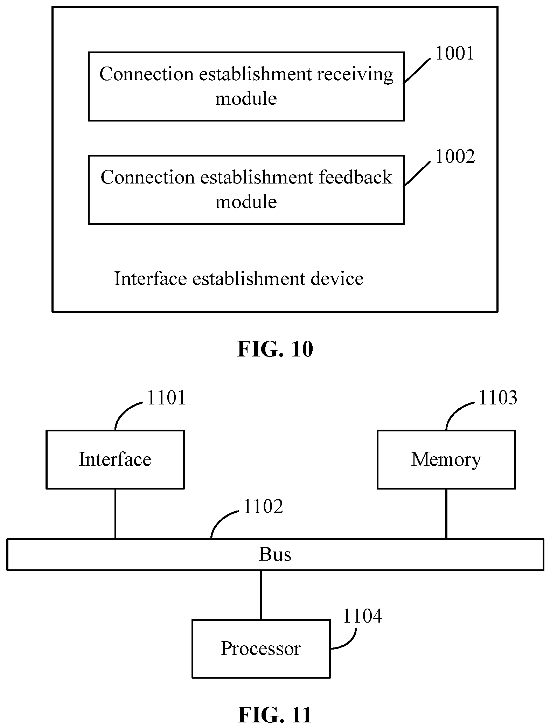

An embodiment of the present application further provides another interface embellishment device. As shown in FIG. 10 that is a structural schematic diagram two of an interface establishment device according to an embodiment of the present application, the device includes a connection establishment receiving module 1001 and a connection establishment feedback module 1002.

The connection establishment receiving module 1001 is configured to receive an interface establishment request message from an IAB-node.

The connection establishment feedback module 1002 is configured to, in a case where a DU identity of the IAB-node conflicts with another DU identity having a connection relationship with the DU identity, send an interface establishment failure message to the IAB-node, where a cause value in the interface establishment failure message is unknown or is that a DU identity has been already allocated; or send an interface establishment response message to the IAB-node, where the interface establishment response message includes a reallocated DU identity.

FIG. 11 is a structural schematic diagram of an IAB node according to an embodiment of the present application. As shown in FIG. 11, the IAB node 110 provided by this embodiment of the present application includes a memory 1103 and a processor 1104. The IAB node 110 may further include an interface 1101 and a bus 1102. The interface 1101, the memory 1103, and the processor 1104 are connected via the bus 1102. The memory 1103 is configured to store instructions. The processor 1104 is configured to read the instructions to execute the technical solutions of the above-described method embodiments applied to the IAB node. The implementation principles and technical effects of the processor are similar to those of the method embodiments, and details are not repeated here.

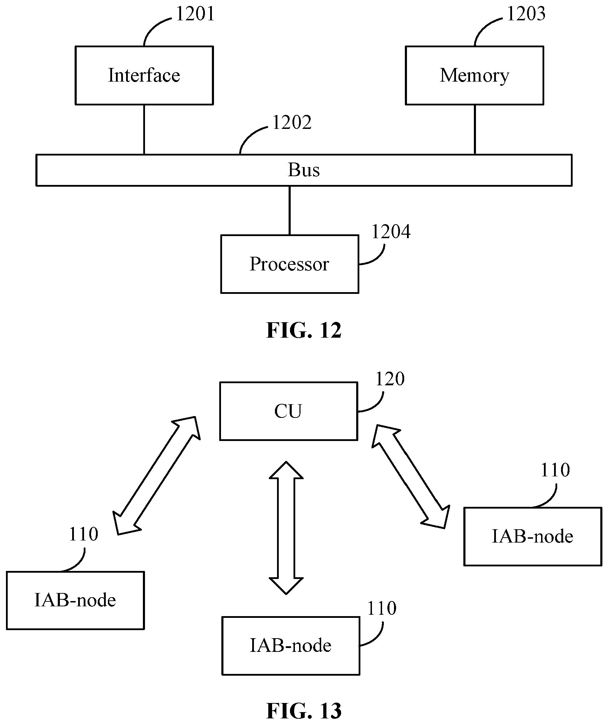

FIG. 12 is a structural schematic diagram of a CU according to an embodiment of the present application. As shown in FIG. 12, the CU 120 provided by this embodiment of the present application includes a memory 1203 and a processor 1204. The CU 120 may further include an interface 1201 and a bus 1202. The interface 1201, the memory 1203, and the processor 1204 are connected via the bus 1202. The memory 1203 is configured to store instructions. The processor 1204 is configured to read the instructions to execute the technical solutions of the above method embodiments applied to the CU. The implementation principles and technical effects of the processor are similar to those of the method embodiments, and details are not repeated here.

FIG. 13 is a structural schematic diagram one of a communication system according to an embodiment of the present application. As shown in FIG. 13, the system includes the IAB node 110 described in the above-described embodiment and the CU 120 described in the above-described embodiment.

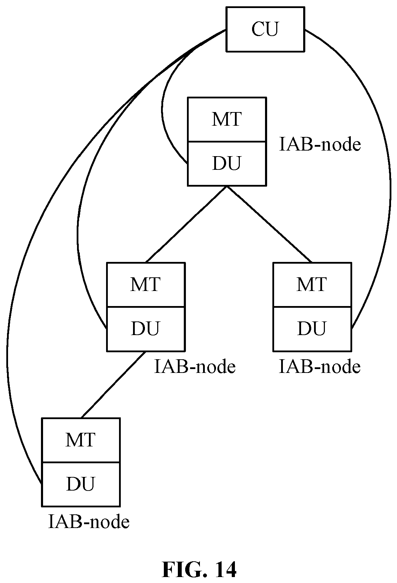

FIG. 14 is a structural schematic diagram two of a communication system according to an embodiment of the present application. As shown in FIG. 14, the system includes the IAB-node 110 described in the above-mentioned embodiment and the CU 120 described in the above-mentioned embodiment. Each IAB-node is divided into an MT part and a DU part. The MT part of each IAB-node has a Uu connection with a DU respectively, and the DU part of each IAB-node has an F1 connection with the CU respectively.

The present application provides a storage medium. The storage medium is configured to store a computer program which, when executed by a processor, performs the method of the above-described embodiments.

The embodiments of the present application may be provided as methods, systems or computer program products. Therefore, the present application may take the form of a hardware embodiment, a software embodiment, or an embodiment combining software and hardware. The present application may take the form of a computer program product implemented on one or more computer-usable storage media (including, but not limited to, a disk memory and an optical memory) that include computer-usable program codes.

The present application is described with reference to flowcharts and/or block diagrams of methods, apparatus (systems) and computer program products according to embodiments of the present application. It should be understood that computer program instructions implement each flow and/or block in the flowcharts and/or block diagrams and a combination of flows and/or blocks in the flowcharts and/or block diagrams. These computer program instructions may be provided to a processor of a general-purpose computer, special-purpose computer, embedded processor or another programmable data processing device to produce a machine so as to enable the instructions executed by the processor of the computer or another programmable data processing device to generate an apparatus for implementing the functions specified in one or more flows in the flowcharts and/or one or more blocks in the block diagrams.

These computer program instructions may also be stored in a computer-readable memory that can direct a computer or another programmable data processing device to operate in a particular manner, so that the instructions stored in the computer-readable memory produce an article of manufacture including an instruction apparatus. The instruction apparatus implements the functions specified in one or more flows in the flowcharts and/or one or more blocks in the block diagrams.

These computer program instructions may also be loaded onto a computer or another programmable data processing device so that a series of operating steps are performed on a computer or another programmable device, and thereby the instructions executed on the computer or another programmable device provide steps for implementing the functions specified in one or more flows in the flowcharts and/or one or more blocks in the block diagrams.

## Claims

1. A connection establishment method, performed by an integrated access and backhaul node, IAB-node, comprising:
acquiring (S11) address information of a first centralized unit, CU; and
establishing (S12) a connection with the first CU according to the address information of the first CU, wherein the first CU is a target donor CU, and
**characterized in that** the acquiring address information of a first CU comprises:
receiving the address information of the first CU from a second CU, and the second CU is a source donor CU,
wherein the address information of the first CU is carried in an F1 message or an RRC reconfiguration message.

2. The method of claim 1, wherein the the RRC reconfiguration message is received by a Mobile Terminal, MT, function part of the IAB-node and the RRC reconfiguration message includes an IP address of the target donor CU and other information such as a cell identity and a physical cell identity.

3. The method of claim 1, wherein the F1 message is received by a Distributed Unit, DU, function part of the IAB node and the F1 message includes an IP address of the target donor CU and is used for instructing the DU of the IAB-node to release a F1 connection with the source donor CU and to establish the connection with the target donor CU, wherein the connection with the target donor CU is a F1 connection.

4. The method of claim 1, wherein the IAB-node is a downstream IAB-node of a parent IAB-node, wherein when the IAB-node receives the address information, the IAB-node does not immediately initiate the connection establishment, but waits for a success of a handover of the parent IAB-node before the IAB-node releases a F1 connection with the source donor CU and establishes the connection with the target donor CU, wherein the connection with the target donor CU is a F1 connection.

5. The method of claim 4, before the establishing a connection with the first CU, further comprising:
receiving (S21) indication information from the parent IAB-node;
wherein the indication information indicates that the handover of the parent IAB-node is completed.

6. An integrated access and backhaul node, IAB-node (110), comprising a processor (1104) and a memory (1103);
wherein the memory (1103) is configured to store instructions; and
the processor (1104) is configured to read the instructions to perform the method of any one of claims 1 to 5.

## Patentansprüche

1. Verfahren zur Herstellung einer Verbindung, das durch einen Integrated-Access-and-Backhaul-Knoten, IAB-Knoten, durchgeführt wird, umfassend:
Erfassen (S11) von Adressinformationen einer ersten Zentraleinheit, CU, und
Herstellen (S12) einer Verbindung mit der ersten CU gemäß den Adressinformationen der ersten CU, wobei die erste CU eine Ziel-Donor-CU ist, und
**dadurch gekennzeichnet, dass** das Erfassen von Adressinformationen einer ersten CU Folgendes umfasst:
Empfangen der Adressinformationen der ersten CU von einer zweiten CU, wobei die zweite CU eine Quell-Donor-CU ist,
wobei die Adressinformationen der ersten CU in einer F1-Nachricht oder einer RRC-Rekonfigurationsnachricht enthalten sind.

2. Verfahren nach Anspruch 1, wobei die RRC-Rekonfigurationsnachricht durch ein Mobile-Terminal(MT)-Funktionsteil des IAB-Knotens empfangen wird und die RRC-Rekonfigurationsnachricht eine IP-Adresse der Ziel-Donor-CU und andere Informationen wie eine Zellidentität und eine physikalische Zellidentität beinhaltet.

3. Verfahren nach Anspruch 1, wobei die F1-Nachricht durch einen Distributed-Unit(DU)-Funktionsteil des IAB-Knotens empfangen wird und die F1-Nachricht eine IP-Adresse der Ziel-Donor-CU beinhaltet und verwendet wird, um die DU des IAB-Knotens anzuweisen, eine F1-Verbindung mit der Quell-Donor-CU freizugeben und die Verbindung mit der Ziel-Donor-CU herzustellen, wobei die Verbindung mit der Ziel-Donor-CU eine F1-Verbindung ist.

4. Verfahren nach Anspruch 1, wobei der IAB-Knoten ein nachgelagerter IAB-Knoten eines übergeordneten IAB-Knotens ist, wobei der IAB-Knoten, wenn der IAB-Knoten die Adressinformationen empfängt, die Verbindungsherstellung nicht unmittelbar einleitet, sondern auf einen erfolgreichen Handover des übergeordneten IAB-Knotens wartet, bevor der IAB-Knoten eine F1-Verbindung mit der Quell-Donor-CU freigibt und die Verbindung mit der Ziel-Donor-CU herstellt, wobei die Verbindung mit der Ziel-Donor-CU eine F1-Verbindung ist.

5. Verfahren nach Anspruch 4, das vor dem Herstellen einer Verbindung mit der ersten CU ferner Folgendes umfasst:
Empfangen (S21) von Angabeinformationen von dem übergeordneten IAB-Knoten,
wobei die Angabeinformationen angeben, dass der Handover des übergeordneten IAB-Knotens abgeschlossen ist.

6. Integrated-Access-and-Backhaul-Knoten, IAB-Knoten (110), umfassend einen Prozessor (1104) und einen Speicher (1103),
wobei der Speicher (1103) ausgelegt ist, um Anweisungen zu speichern, und
der Prozessor (1104) ausgelegt ist, um die Anweisungen auszulesen, um das Verfahren nach einem der Ansprüche 1 bis 5 durchzuführen.

## Revendications

1. Procédé d'établissement de connexion, effectué par un nœud de raccordement d'accès intégré, nœud IAB, comprenant :
l'acquisition (S11) d'une information d'adresse d'une première unité centralisée, UC ; et
l'établissement (S12) d'une connexion avec la première UC en fonction de l'information d'adresse de la première UC, dans lequel la première UC est une UC donneuse cible, et
**caractérisé en ce que** l'acquisition d'information d'adresse d'une première UC comprend :
la réception de l'information d'adresse de la première UC en provenance d'une deuxième UC, et la deuxième UC est une UC donneuse source,
dans lequel l'information d'adresse de la première UC est transportée dans un message F1 ou un message de reconfiguration RRC.

2. Procédé selon la revendication 1, dans lequel le message de reconfiguration RRC est reçu par une partie fonctionnelle Terminal Mobile, TM, du nœud IAB et le message de reconfiguration RRC comporte une adresse IP de l'UC donneuse cible et d'autres informations telles qu'une identité de cellule et une identité de cellule physique.

3. Procédé selon la revendication 1, dans lequel le message F1 est reçu par une Unité Distribuée, UD, partie fonctionnelle du nœud IAB et le message F1 comporte une adresse IP de l'UC donneuse cible et est utilisé pour ordonner à l'UD du nœud IAB de libérer une connexion F1 avec l'UC donneuse source et pour établir la connexion avec l'UC donneuse cible, dans lequel la connexion avec l'UC donneuse cible est une connexion F1.

4. Procédé selon la revendication 1, dans lequel le nœud IAB est un nœud IAB aval d'un nœud IAB parent, dans lequel, lorsque le nœud IAB reçoit l'information d'adresse, le nœud IAB n'initie pas immédiatement l'établissement de connexion, mais attend la réussite d'une passation du nœud IAB parent avant que le nœud IAB ne libère une connexion F1 avec l'UC donneuse source et établit la connexion avec l'UC donneuse cible, dans lequel la connexion avec l'UC donneuse cible est une connexion F1.

5. Procédé selon la revendication 4, comprenant en outre, avant l'établissement d'une connexion avec la première UC :
la réception (S21) d'informations d'indication en provenance du nœud IAB parent ;
dans lequel les informations d'indication indiquent que la passation du nœud IAB parent est terminée.

6. Nœud de raccordement d'accès intégré, IAB (110), comprenant un processeur (1104) et une mémoire (1103) ;
dans lequel la mémoire (1103) est configurée pour stocker des instructions ; et
le processeur (1104) est configuré pour lire les instructions pour réaliser le procédé selon l'une quelconque des revendications 1 à 5.
